# EUROPÄISCHE PATENTSCHRIFT

(11) **EP 3 173 317 B1**
(45) Veröffentlichungstag und Bekanntmachung des Hinweises auf die Patenterteilung: **12.12.2018**
(21) Anmeldenummer: 16002213.3
(22) Anmeldetag: 14.10.2016
(51) Int. Cl.: B62D 21/15, B62D 27/02, B29C 65/70, B29C 65/00, B62D 29/00, B29C 45/00, B29C 70/48, B62D 29/04

(54) **KNOTENSTRUKTUR MIT VERBESSERTEN CRASHEIGENSCHAFTEN DURCH FANGSEIL, VERFAHREN ZUR HERSTELLUNG UND FAHRZEUGRAHMEN**
NODE STRUCTURE WITH IMPROVED CRASH PROPERTIES DUE TO ARRESTOR CABLE, METHOD FOR PREPARATION AND VEHICLE FRAME
STRUCTURE DE LIAISON PRÉSENTANT DES PERFORMANCES ANTICHOCS AMÉLIORÉES AU MOYEN DE CÂBLE DE SÉCURITÉ, PROCÉDÉ DE FABRICATION ET CHÂSSIS-CADRE DE VÉHICULE

(30) Priorität: 06.11.2015 DE 102015014363
(43) Veröffentlichungstag der Anmeldung: 31.05.2017
(73) Patentinhaber: AUDI AG, 85045 Ingolstadt (DE)
(72) Erfinder: Eidmann, Florian, DE - 74613 Öhringen (DE); Stoll, Oliver, DE - 69429 Waldbrunn (DE)
(74) Vertreter: Eickmeyer, Dietmar

(56) Entgegenhaltungen:
- EP-A1- 2 597 017
- EP-A2- 1 357 016
- DE-A1- 19 644 384
- DE-A1-102006 011 808
- DE-A1-102011 108 156
- DE-C1- 4 423 642
- FR-A1- 3 011 521

## Beschreibung

Die Erfindung betrifft eine Knotenstruktur für eine Fahrzeugkarosserie, mit wenigstens zwei Hohlprofilbauteilen und einem Verbindungsknoten, der die Hohlprofilbauteile an knotenseitigen Profilenden verbindet.

Die Erfindung betrifft ferner ein Verfahren zur Herstellung einer solchen Knotenstruktur, einen Rahmen (Karosserierahmen) mit wenigstens einer solchen Knotenstruktur und ein Verfahren zur Herstellung eines solchen Rahmens.

Aus dem Stand der Technik sind Karosserieaufbauten für Kraftfahrzeuge, insbesondere Personenkraftwagen, bekannt, die aus einzelnen vorgefertigten Profilbauteilen gebildet sind, wobei die Profilbauteile an sogenannten Knotenstellen mittels Verbindungsknoten bzw. Knotenelementen gefügt bzw. miteinander verbunden sind. Zum Stand der Technik wird bspw. auf die Patentschriften DE 102 56 608 A1, DE 10 2014 209 991 A1 und DE 10 2007 027 593 A1 hingewiesen. Ferner werden für derartige Karosserieaufbauten mit einem aus Profilbauteilen gebildeten Rahmen oder Rahmenabschnitt auch aus Faserkunststoffverbund gebildete Profilbauteile verwendet, wodurch sich mitunter erhebliche Gewichtseinsparungen erzielen lassen. Zum diesbezüglichen Stand der Technik wird bspw. auf die Patentschriften DE 44 23 642 C1, DE 10 2011 108 156 A1, DE 10 2013 226 607 A1 und DE 10 2013 220 209 A1 hingewiesen.

Die DE 10 2006 011 808 A1 beschreibt eine Einrichtung zur Erhöhung der Steifigkeit von Hohlprofilen, insbesondere von Tragstrukturen in Kraftfahrzeugen, wobei in dem Hohlprofil ein vorgespanntes Seil angeordnet ist. Die DE 196 44 384 A1 beschreibt einen Karosserieaufbau mit einem umlaufenden Spannseil im Bodenbereich.

Der Erfindung liegt die Aufgabe zugrunde, eine Knotenstruktur eingangs genannter Art anzugeben, die verbesserte Crasheigenschaften aufweist.

Diese Aufgabe wird gelöst durch eine erfindungsgemäße Knotenstruktur entsprechend dem Patentanspruch 1. Mit nebengeordneten Patentansprüchen erstreckt sich die Erfindung ferner auf ein erfindungsgemäßes Verfahren zur Herstellung einer solchen Knotenstruktur, auf einen erfindungsgemäßen Rahmen (bspw. Space-Frame-Rahmen) für eine Fahrzeugkarosserie mit wenigstens einer solchen Knotenstruktur und auf ein erfindungsgemäßes Verfahren zur Herstellung eines solchen Rahmens. Bevorzugte Weiterbildungen und Ausgestaltungen der Erfindung ergeben sich analog für alle Erfindungsgegenstände aus den abhängigen Patentansprüchen, der nachfolgenden Beschreibung und den Figuren.

Die erfindungsgemäße Knotenstruktur ist dadurch gekennzeichnet, dass zumindest zwei deren Hohlprofilbauteile durch wenigstens ein im Inneren verlaufendes und sich durch den Verbindungsknoten hindurch erstreckendes Fangseil verbunden sind.

Falls es im Falle eines Crashs (Fahrzeugunfalls) zu einem Bruch der Knotenstruktur kommt, hält das integrierte Fangseil die Hohlprofilbauteile und den Verbindungsknoten zusammen und verhindert dadurch weiteren Schaden und verringert die Verletzungsgefahr.

Unter einem Hohlprofilbauteil wird ein rohrartiges Profilbauteil mit geschlossenem Querschnitt (Hohlprofil) und mit wenigstens einer Profilkammer verstanden. Bevorzugt ist wenigstens eines der Hohlprofilbauteile aus Faserkunststoffverbund (FKV) bzw. einem Faserkunststoffverbundmaterial gebildet (womit im Weiteren ein konsolidierter und ausgehärteter Faserkunststoffverbundwerkstoff gemeint ist). Insbesondere sind alle Hohlprofilbauteile aus Faserkunststoffverbundmaterial gebildet. Bei den Fasern kann es sich um Kohlenstofffasern, Glasfasern und/oder sonstige Fasern handeln. Bevorzugt handelt es sich um Langfasern bzw. Endlosfasern, die, bspw. auch in einem Lageaufbau, lastpfadgerecht angeordnet sind. Bei dem Kunststoffmaterial (Matrix) kann es sich um einen duroplastischen oder auch thermoplastischen Kunststoff handeln. Die aus Faserkunststoffverbundmaterial gebildeten Hohlprofilbauteile können eine Wandstärke von 0,6 mm bis 10 mm, bevorzugt von 2 mm bis 8 mm und insbesondere von 3 mm bis 7 mm aufweisen.

Der Verbindungsknoten ist bevorzugt aus faserverstärktem und insbesondere kurzfaserverstärktem Kunststoff gebildet. Die Hohlprofilbauteile sind an ihren knotenseitigen Profilenden durch Einbindung in die Kunststoffmasse form- und gegebenenfalls auch stoffschlüssig verbunden. Bei der Kunststoffmasse (Matrixmaterial) kann es sich sowohl um thermoplastische als auch bevorzugt um duroplastische Kunststoffe (Harze) handeln. Bei den Verstärkungsfasern kann es sich um Kohlenstofffasern, Glasfasern, Kunstfasern, Mischfasern, Recyclingfasern und/oder dergleichen handeln. Die Verstärkungsfasern können eine Länge von 1 mm bis 100 mm, bevorzugt von 2 mm bis 50 mm und insbesondere von 3 mm bis 25 mm aufweisen.

Unter einem Fangseil wird eine biegeschlaffe Leine (Fangleine) verstanden, die sich über wenigstens einen Verbindungsknoten hinweg durch wenigstens zwei der Hohlprofilbauteile hindurch erstreckt. Das Fangseil kann aus einem Kunststoffmaterial (bspw. einem Elastomer, Thermoplast oder Kevlar), einem Fasermaterial (bspw. zusammengedrehte Natur- oder Kunstfasern, insbesondere trockene Kohlenstoff- oder Glasfasern), einem Kunststoffverbundmaterial oder einem Metallmaterial (insbesondere zusammengedrehte Drähte) gebildet sein. Insbesondere handelt es sich bei dem Fangseil um ein beschichtetes, z. B. kunststoffummanteltes, Stahl- oder Aluminiumseil.

Bevorzugt ist das Fangseil im Material des Verbindungsknotens, wobei es sich insbesondere um einen faserverstärkten Kunststoff handelt, eingebettet und dadurch fixiert. Ferner können im Inneren der Hohlprofilbauteile Halterungen, Führungen und/oder dergleichen vorgesehen sein.

Das Fangseil kann an offenen Profilenden aus der Knotenstruktur herausgeführt und bspw. an einem Befestigungspunkt der Fahrzeugkarosserie befestigt sein. Bevorzugt ist vorgesehen, dass das Fangseil, zumindest an einem Seilende, mittels eines Profilendstücks befestigt ist. Das Profilendstück kann aus einem faserverstärkten Kunststoff gebildet sein.

Außerdem kann vorgesehen sein, dass wenigstens eines der Hohlprofilbauteile mit einem (d. h. wenigstens einem) spiralartig umwickelten Stützband versehen ist. Das betreffende Hohlprofilbauteil ist zumindest abschnittsweise und bevorzugt im Wesentlichen über seine gesamte Länge von dem Stützband umwickelt.

Das Stützband kann auch derart aufgewickelt sein, dass es sich über den Verbindungsknoten hinweg (oder auch durch den Verbindungsknoten hindurch) über mehrere Hohlprofilbauteile erstreckt.

Falls es im Falle eines Crashs zu einem Bruch des betreffenden Hohlprofilbauteils kommt, hält das Stützband die Bruchteile zusammen und verhindert dadurch weiteren Schaden und verringert die Verletzungsgefahr. Ferner wird das betreffende Hohlprofilbauteil durch das Stützband stabilisiert und kann dadurch eine höhere Belastung ertragen.

Unter einem Stützband wird ein zumindest bei der Verarbeitung biegeschlaffer Strang verstanden. Das Stützband bzw. der Strang kann lose aufgewickelt oder stoffschlüssig (bspw. durch Verkleben) mit dem Hohlprofilbauteil verbunden sein. Das Stützband kann aus einem Kunststoffmaterial (bspw. einem Elastomer, Thermoplast oder Kevlar), einem Fasermaterial (bspw. aus Natur-, Kunst-, Glas- oder Kohlenstofffasern), einem Kunststoffverbundmaterial (das bspw. durch Nasswickeln und anschließendes Aushärten aufgebracht ist) oder einem Metallmaterial (insbesondere aus einem oder mehreren Drähten) gebildet sein.

Bevorzugt ist vorgesehen, dass die Hohlprofilbauteile an ihren knotenseitigen Profilenden mit stopfen- bzw. pfropfartigen, aus Kunststoffschaummaterial bzw. Kunstschaumstoff gebildeten Verschlusselementen verschlossen sind. Mit diesen Verschlusselementen wird, vor allem bei kleineren Wandstärken, ein Abstützungseffekt im Bereich des Verbindungsknotens erzielt und dadurch die Crashbelastbarkeit der Knotenstruktur gesteigert.

Bei dem Kunststoffschaummaterial handelt es sich insbesondere um einen hitzebeständigen und druckfesten, vorzugsweise geschlossenzelligen, Hartschaum bzw. Hartschaumstoff, bspw. auf PMI-Basis (Polymethacrylimid) oder auf PU-Basis (Polyurethan). Der Kunststoffschaum kann bspw. eine Dichte von 50 kg/m³, insbesondere von 100 kg/m³, bis 200 kg/m³ aufweisen. Das aus Kunststoffschaummaterial gebildete Verschlusselement kann bspw. aus einem vorgefertigten Schaummaterial (insbesondere ein Schaumhalbzeug, wie bspw. eine Hartschaumplatte oder dergleichen) hergestellt und in das offene Profilende eingeklebt werden. Eine andere Möglichkeit besteht darin, das offene Profilende auszuschäumen und dadurch stopfen- bzw. pfropfartig zu verschließen. Die Verschlusstiefe des pfropf- bzw. stopfenartigen Verschlusselements (damit ist die Einsteck-, Einkleb- oder Einschäumtiefe gemeint) kann 10 mm bis 100 mm, bevorzugt 20 mm bis 80 mm, besonders bevorzugt 40 mm bis 60 mm und insbesondere ca. 50 mm betragen.

Das erfindungsgemäße Verfahren zur Herstellung einer erfindungsgemäßen Knotenstruktur umfasst die folgenden Schritte:
- Bereitstellen der vorgefertigten Hohlprofilbauteile;
- Auffädeln bzw. Aufziehen der Hohlprofilbauteile, wobei wenigstens zwei der Hohlprofilbauteile auf wenigstens ein Fangseil aufgezogen werden;
- Positionieren der knotenseitigen Profilenden in einem den Verbindungsknoten erzeugenden Presswerkzeug;
- Ausführen eines Pressvorgangs unter Zugabe einer faserhaltigen, insbesondere kurzfaserhaltigen, Kunststoffmasse zur Erzeugung eines die Profilenden verbindenden Verbindungsknotens.

Das Bereitstellen umfasst z. B. das Konfektionieren, das Herrichten, das Reinigen und/oder das Prüfen der zu verbindenden Hohlprofilbauteile. Das Bereitstellen umfasst gegebenenfalls auch das Erzeugen von Stoßflächen (s. u.).

Die knotenseitigen Profilenden sind bevorzugt mit korrespondierenden Stoßflächen ausgebildet und werden derart im Presswerkzeug positioniert, dass zwischen den Stoßflächen ein homogener (d. h. im Wesentlichen konstant breiter) Beabstandungsspalt besteht, der während des Pressvorgangs mit der faserhaltigen Kunststoffmasse aufgefüllt wird. Innerhalb des Beabstandungsspalts kann das Fangseil in das faserhaltige Kunststoffmaterial eingebettet und dadurch fixiert werden. Bevorzugt wird vorher wenigstens eines der Hohlprofilbauteile mit einem Verschlusselement (s. o.) verschlossen, durch das das Fangseil am betreffenden Rohrende arretiert bzw. fixiert werden kann und das während des Pressvorgangs ein Eindringen der faserhaltigen Kunststoffmasse in das Hohlprofilbauteil verhindert.

Ein weiteres erfindungsgemäßes Verfahren dient der Herstellung eines Rahmens (z. B. ein Space-Frame-Rahmen) oder Rahmenabschnitts für eine Fahrzeugkarosserie, der wenigstens ein Fangseil aufweist, das sich über mehrere zum Rahmen gehörende Verbindungsknoten hinweg erstreckt. Es ist vorgesehen, dass die Verbindungsknoten in einer vorbestimmten Reihenfolge bzw. Abfolge hergestellt werden und hierbei das Fangseil, gegebenenfalls unter Auffädelung eines weiteren Hohlprofilbauteils, zum jeweils nächsten herzustellenden Verbindungsknoten weitergeführt bzw. -gezogen wird.

Die Erfindung wird nachfolgend beispielhaft und in nicht einschränkender Weise anhand der schematischen Figuren näher erläutert. Die in den Figuren gezeigten und/oder nachfolgend erläuterten Merkmale können, auch losgelöst von konkreten Merkmalskombinationen, allgemeine Merkmale der Erfindung sein und die Erfindung weiterbilden.
- Fig. 1: zeigt in einer perspektivischen Ansicht einen aus Hohlprofilbauteilen gebildeten Rahmenabschnitt einer Kraftfahrzeugkarosserie.
- Fig. 2: zeigt in einer perspektivischen Darstellung und in einer Schnittdarstellung eine zum Rahmenabschnitt der Fig. 1 gehörende Knotenstruktur mit einem Verbindungsknoten.
- Fig. 3: veranschaulicht in mehreren Schnittdarstellungen die Herstellung eines Verbindungsknotens.

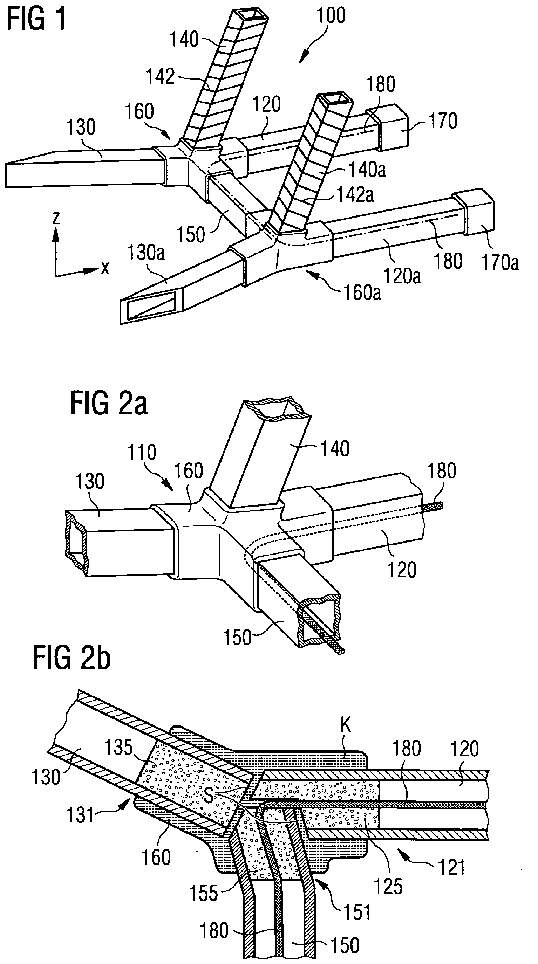

Bei dem in Fig. 1 gezeigten Rahmenabschnitt handelt es sich um eine Hinterwagenstruktur 100, die Teil eines Rahmens einer PKW-Fahrzeugkarosserie ist. Die Hinterwagenstruktur 100 umfasst mehrere aus Faserkunststoffverbundmaterial gebildete und getrennt voneinander vorgefertigte Hohlprofilbauteile 120, 120a, 130, 130a, 140, 140a und 150, die über Verbindungsknoten 160 und 160a fest miteinander verbunden sind. Die Verbindungsknoten 160 und 160a sind aus faserverstärktem Kunststoff K gebildet. Die Rahmenprofilteile 120 und 120a sind ferner an ihren freien, von den Verbindungsknoten 160 und 160a wegweisenden Profilenden mit Profilendstücken 170 und 170a versehen. Die Profilendstücke 170 und 170a sind ebenfalls aus faserverstärktem, insbesondere kurzfaserverstärktem Kunststoff gebildet.

Die Hohlprofilbauteile 120, 120a, 130, 130a, 140, 140a und 150 sind bspw. mittels Pultrusion (Faserkunststoffverbund-Pultrusionsprofile), Flechten oder Wickeln hergestellt. Die Hohlprofilbauteile 120, 120a, 130, 130a, 140, 140a und 150 können belastungsabhängig unterschiedlich ausgebildet sein und daher verschiedene Querschnitte und/oder Wanddicken aufweisen und/oder auch aus verschiedenen Faserkunststoffverbundmaterialien gebildet sein. Ferner können die Hohlprofilbauteile 120, 120a, 130, 130a, 140, 140a und 150 über ihren Längserstreckungen mit veränderlichen Querschnitten ausgebildet sein. Die Hohlprofilbauteile 140 und 140a sind mit einem spiralartig umwickelten Stützband 142 bzw. 142a versehen, dessen Wicklungswinkel bezüglich der Profillängsachse zwischen > 0° und < 90° liegen kann. Ein solches Stützband 142 kann sowohl außenseitig (wie gezeigt) als auch innenseitig angeordnet werden.

Die Hinterwagenstruktur 100 kann ferner offene Profilbauteile (bspw. U-Profile) und/oder Vollprofilbauteile aufweisen, sowie Profilbauteile, die aus anderen Materialien (bspw. auch Metall) gebildet sind, wobei auch solche Profilbauteile über die Verbindungsknoten 160 bzw. 160a in die Rahmenstruktur 100 eingebunden sein können. Die Hinterwagenstruktur 100 verfügt trotzt ihres geringen Gewichts über eine hervorragende Festigkeit, Steifigkeit und Crashstabilität. Die Crasheigenschaften werden durch die Stützbänder 142 verbessert. Zur Verbesserung der Crasheigenschaften ist ferner ein die Hohlprofilbauteile 120, 150 und 120a durchlaufendes Fangseil 180 vorgesehen, dessen Seilenden an den Profilendstücken 170 und 170a befestigt sind.

Die in einem Verbindungsknoten 160 bzw. 160a verbundenen Hohlprofilbauteile bilden zusammen mit diesem Verbindungsknoten eine Knotenstruktur im Sinne der Erfindung. Fig. 2a zeigt in einer perspektivischen Darstellung eine solche Knotenstruktur 110 für den in Fahrtrichtung x links liegenden Rahmenbereich. Die integrale Knotenstruktur 110 umfasst mehrere Hohlprofilbauteile 120, 130, 140 (ohne Stützband) und 150, die an knotenseitigen Profilenden 121, 131, 151 (siehe Fig. 2b) im Verbindungsknoten 160 fest miteinander verbunden sind. Der Verbindungsknoten 160 ist somit ein Verbindungselement zur Verbindung der betreffenden Hohlprofilbäuteile.

Die Knotenstruktur 110 weist ferner ein durch den Verbindungsknoten 160 hindurchgehendes Fangseil 180 auf, wie aus der Schnittdarstellung in Fig. 2b ersichtlich. Die zunächst offenen Hohlprofilenden 121, 131, 151 sind durch stopfenartige Verschlusselemente 125, 135 und 155 aus einem Kunststoffschaummaterial verschlossen. Das Fangseil 180 verläuft durch die Verschlusselemente 125 und 155 hindurch und wird dadurch geführt. Ferner ist das Fangseil 180 im Beabstandungsspalt S in das faserhaltige Kunststoffmaterial K eingebettet und dadurch fixiert.

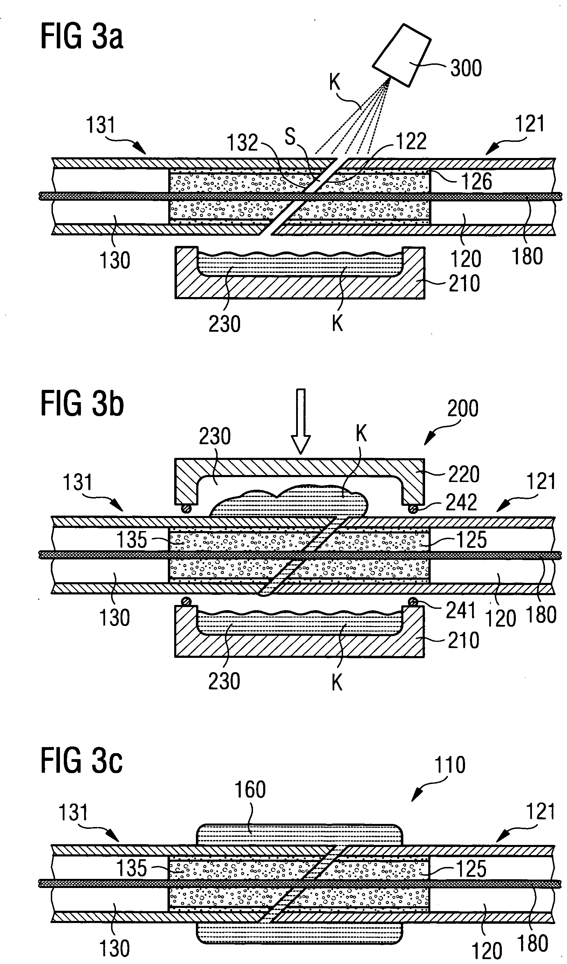

Nachfolgend wird unter Bezug auf die Fig. 3 die Herstellung eines Verbindungsknotens 160 erläutert. In nicht einschränkender Weise wird dabei zum Zwecke einer vereinfachenden Darstellung und Beschreibung nur auf die Verbindung von zwei Hohlprofilbauteilen 120 und 130 eingegangen.

Fig. 3 zeigt die knotenseitigen Profilenden 121 und 131 der beiden mittels Verbindungsknoten 160 zu verbindenden Hohlprofilbauteile 120 und 130. Die Hohlprofilbauteile 120 und 130 können, anders als dargestellt, zumindest an ihren zu verbindenden Profilenden bzw. an ihren knotenseitigen Endabschnitten 121 und 131 mit unterschiedlichen Querschnitten bzw. Querschnittsabmessungen und/oder mit unterschiedlichen Wandstärken bzw. Wanddicken ausgebildet sein.

Die knotenseitigen Profilenden 121 und 131 der zu verbindenden Hohlprofilbauteile 120 und 130 sind mittels pfropf- bzw. stopfenartiger Verschlusselemente 125 und 135 verschlossen. Die Verschlusselemente 125 und 135 sind aus einem Kunststoffschaummaterial, insbesondere einem temperatur- und druckbeständigen Hartschaum, gebildet und mittels Klebstoff 126 eingeklebt. Die Verschlusselemente 125 und 135 sind ferner zum Einziehen des Fangseils 180 durchbohrt. Zudem sind die knotenseitigen Profilenden 121 und 131 mit korrespondierenden Stoßflächen 122 und 132 ausgebildet. Bei der in Fig. 3 gezeigten Ausführungsmöglichkeit sind diese Stoßflächen 122 und 132 lediglich beispielhaft als gerade Schrägflächen gestaltet (eine andere Ausgestaltung zeigt Fig. 2b).

Zur Erzeugung des Verbindungsknotens 160 werden die Profilenden 121 und 131 der Hohlprofilbauteile 120 und 130 in ein den Verbindungsknoten 160 erzeugendes Presswerkzeug 200 eingelegt, wie in Fig. 3a gezeigt, nachdem diese auf ein Fangseil 180 aufgefädelt wurden. (Das Fangseil 180 kann gegebenenfalls auch erst nach dem Einlegen der Profilenden 121 und 131 in das Presswerkzeug 200 eingefädelt werden.) Das Presswerkzeug 200 ist so ausgebildet, dass eine lagegenaue Fixierung der Profilenden 121 und 131 ermöglicht wird, wobei zwischen den Stoßflächen 122 und 132 ein homogener Beabstandungsspalt S besteht (siehe auch Fig. 2b). Die Spaltbreite des Beabstandungsspalts S beträgt bspw. 0,5 mm bis 2,0 mm.

In der Werkzeugkavität 230 des Werkzeugunterteils 210 befindet sich eine bereits vor dem Positionieren der Profilenden 121 und 131 eingebrachte kurzfaserhaltige bzw. Kurzfasern enthaltende Kunststoffmasse K, insbesondere mit duroplastischer Matrix (Harz). Nach dem Positionieren der zu verbindenden Profilenden 121 und 131 wird auf den Verbindungsbereich weitere kurzfaserhaltige Kunststoffmasse K aufgebracht bzw. aufgespritzt, bspw. mithilfe der gezeigten Sprühvorrichtung 300.

Anschließend wird das Presswerkzeug 200 durch Absenken des Werkzeugoberteils 220 geschlossen, wie in Fig. 3b gezeigt, und ein Pressvorgang ausgeführt. Bei diesem Pressvorgang verteilt sich die definierte Menge der Kurzfasern enthaltenden Kunststoffmasse K in der Kavität 230. Hierbei werden die in der Kavität 230 angeordneten Profilenden 121 und 131 der Hohlprofilbauteile 120 und 130 formschlüssig umformt (gegebenenfalls kann sich auch eine stoffschlüssige Verbindung ausbilden), wobei die kurzfaserhaltige Kunststoffmasse K auch in den Beabstandungsspalt S hinein gedrückt wird. Die Verschlusselemente 125 und 135 wirken als Barrieren und verhindern das Eindringen der faserhaltigen Kunststoffmasse K in die Profilkammern der Hohlprofilbauteile 120 und 130, wodurch sich u. a. in der Werkzeugkavität 230 ein ausreichend hoher Formungsdruck aufbauen kann. Gleichzeitig wird das Fangseil 180 in das kurzfaserhaltige Kunststoffmaterial K eingebettet und dadurch fixiert (siehe auch Fig. 2b). Die Form des zu erzeugenden Verbindungsknotens 160 ergibt sich durch die Negativform der Werkzeugkavität 230.

Eine Verfahrensvariante sieht vor, dass die Kunststoffmasse K erst während des Pressvorgangs in die Kavität 230 eingespritzt wird, was auch als Spritzpressen, ähnlich dem RTM-Verfahren, bezeichnet werden kann.

Bei der Erzeugung des Verbindungsknotens 160 werden nur die zu verbindenden Profilenden 121 und 131 in das Presswerkzeug 200 eingelegt, so dass die Hohlprofilbauteile 120 und 130 durch Öffnungen im Presswerkzeug 200 in die Werkzeugkavität 230 hineinragen. Während des Pressvorgangs wird die Abdichtung der Werkzeugkavität 230 mithilfe von Dichtungen 241 und 242 bewerkstelligt. Die Verschlusstiefe der druckfesten Verschlusselemente 125 und 135 ist so bemessen, dass diese wenigstens bis zu dem durch die Werkzeugdichtungen 241 und 242 gebildeten Werkzeugdichtungsbereich ragen und dadurch eine Stabilisierung der Hohlprofilwandungen bewirken und die Kavitätsabdichtung verbessern.

Nachdem die Kunststoffmasse K infolge von Druck- und Temperatureinwirkung ausgehärtet ist, kann das Presswerkzeug 200 geöffnet und die hergestellte Knotenstruktur 110 entnommen werden, wie in Fig. 3c gezeigt.
Die Wandstärke des Verbindungsknotens 160 kann im Bereich von 1 mm bis 15 mm, insbesondere von 4 mm bis 10 mm, liegen, wobei sowohl gleiche als auch unterschiedliche Wandstärken vorgesehen sein können. In analoger Weise können die Profilendestücke 170 und 170a hergestellt werden.

An die hergestellte Knotenstruktur 110 können weitere Verbindungsknoten und hierüber weitere Hohlprofilbauteile oder sonstige Profilbauteile angegliedert werden. Hierzu kann das Fangseil 180 jeweils zu dem als nächstes herzustellenden Verbindungsknoten weitergezogen werden, so dass sich dieses schließlich über mehrere Verbindungsknoten hinweg erstreckt.

## Patentansprüche

1. Knotenstruktur (110) für eine Fahrzeugkarosserie, mit wenigstens zwei Hohlprofilbauteilen (120, 130, 140, 150) und einem Verbindungsknoten (160), der die Hohlprofilbauteile (120, 130, 140, 150) an knotenseitigen Profilenden (121, 131, 151) verbindet,
**dadurch gekennzeichnet, dass**
zumindest zwei der Hohlprofilbauteile (120, 130; 120, 150) durch wenigstens ein im Inneren verlaufendes und sich durch den Verbindungsknoten (160) hindurch erstreckendes Fangseil (180) verbunden sind.

2. Knotenstruktur (110) nach Anspruch 1,
**dadurch gekennzeichnet, dass**
das Fangseil (180) aus einem Kunststoff-, Faser-, Kunststoffverbund- oder Metallmaterial gebildet ist.

3. Knotenstruktur (110) nach Anspruch 1 oder 2,
**dadurch gekennzeichnet, dass**
das Fangseil (180) im Material (K) des Verbindungsknotens (160) eingebettet und dadurch fixiert ist.

4. Knotenstruktur (110) nach Anspruch 1, 2 oder 3,
**dadurch gekennzeichnet, dass**
das Fangseil (180) mittels Profilendstücken (170, 170a) befestigt ist.

5. Knotenstruktur (110) nach einem der vorausgehenden Ansprüche,
**dadurch gekennzeichnet, dass**
wenigstens eines der Hohlprofilbauteile (140) mit einem spiralartig umwickelten Stützband (142) versehen ist.

6. Knotenstruktur (110) nach einem der vorausgehenden Ansprüche,
**dadurch gekennzeichnet, dass**
die Hohlprofilbauteile (120, 130, 150) an ihren knotenseitigen Profilenden (121, 131, 151) mit pfropfartigen, aus Kunststoffschaummaterial gebildeten Verschlusselementen (125, 135, 155) verschlossen sind.

7. Knotenstruktur (110) nach einem der vorausgehenden Ansprüche,
**dadurch gekennzeichnet, dass**
wenigstens eines der Hohlprofilbauteile (120, 130, 140, 150) aus einem Faserkunststoffverbundmaterial gebildet ist.

8. Verfahren zur Herstellung einer Knotenstruktur (110) gemäß Anspruch 1 oder einem davon abhängigen Anspruch, mit den Schritten:
- Bereitstellen der vorgefertigten Hohlprofilbauteile (120, 130; 120, 150);
- Auffädeln der Hohlprofilbauteile, wobei wenigstens zwei der Hohlprofilbauteile (120, 130; 120, 150) auf wenigstens ein Fangseil (180) aufgezogen werden;
- Positionieren der knotenseitigen Profilenden (121, 131; 121, 151) in einem den Verbindungsknoten (160) erzeugenden Presswerkzeug (200);
- Ausführen eines Pressvorgangs unter Zugabe einer faserhaltigen Kunststoffmasse (K) zur Erzeugung des die Profilenden (121, 131; 121, 151) verbindenden Verbindungsknotens (160).

9. Rahmen (100) für eine Fahrzeugkarosserie, mit wenigstens einer Knotenstruktur (110), die gemäß einem der Ansprüche 1 bis 7 ausgebildet ist.

10. Verfahren zur Herstellung eines Rahmens (100) gemäß Anspruch 9, mit wenigstens einem Fangseil (180), welches sich durch mehrere Verbindungsknoten (160, 160a) hindurch erstreckt, wobei diese Verbindungsknoten (160, 160a) in einer vorbestimmten Reihenfolge hergestellt werden und hierbei das Fangseil (180) zum jeweils nächsten herzustellenden Verbindungsknoten weitergeführt wird.

## Claims

1. Node structure (110) for a vehicle body, having at least two hollow profile components (120, 130, 140, 150) and one connecting node (160), which connects the hollow profile components (120, 130, 140, 150) at node-side profile ends (121, 131, 151),
**characterised in that**
at least two of the hollow profile components (120, 130; 120, 150) are connected by means of at least one arrester cable (180) running in the interior and extending through the connecting node (160).

2. Node structure (110) according to claim 1,
**characterised in that**
the arrester cable (180) is formed from a plastic material, fibre material, plastic composite material or metal material.

3. Node structure (110) according to claim 1 or 2,
**characterised in that**
the arrester cable (180) is embedded in and fixed by the material (K) of the connecting node (160).

4. Node structure (110) according to claim 1, 2 or 3,
**characterised in that**
the arrester cable (180) is fastened by means of profile end pieces (170, 170a).

5. Node structure (110) according to any of the preceding claims,
**characterised in that**
at least one of the hollow profile components (140) is furnished with a spirally wrapped support tape (142).

6. Node structure (110) according to any of the preceding claims,
**characterised in that**
the hollow profile components (120, 130, 150) at their node-side profile ends (121, 131, 151) are closed with plug-like closing elements (125, 135, 155) formed from plastic foam material.

7. Node structure (110) according to any of the preceding claims,
**characterised in that**
at least one of the hollow profile components (120, 130, 140, 150) is formed from a fibre plastic composite material.

8. Method for producing a node structure (110) according to claim 1 or a claim depending thereupon, with the steps:
- provision of the prefabricated hollow profile components (120, 130; 120, 150);
- threading of the hollow profile components, wherein at least two of the hollow profile components (120, 130; 120, 150) are drawn onto at least one arrester cable (180);
- positioning of the node-side profile ends (121, 131; 121, 151) in a pressing tool (200) generating the connecting node (160);
- carrying out a pressing procedure with the addition of a fibre-containing plastic mass (K) for generating the connecting node (160) connecting the profile ends (121, 131; 121, 151).

9. Frame (100) for a vehicle body, having at least one node structure (110), which is formed according to any of claims 1 to 7.

10. Method for producing a frame (100) according to claim 9, having at least one arrester cable (180) which extends through a plurality of connecting nodes (160, 160a), wherein these connecting nodes (160, 160a) are produced in a predetermined sequence and to this end the arrester cable (180) is led further to the respectively next connecting node to be produced.

## Revendications

1. Structure de liaison (110) pour une carrosserie de véhicule, avec au moins deux composants à profil creux (120, 130, 140, 150) et un noeud de liaison (160), qui relie les composants à profil creux (120, 130, 140, 150) au niveau d'extrémités de profil (121, 131, 151) côté noeud,
**caractérisée en ce que**
au moins deux des composants à profil creux (120, 130 ; 120, 150) sont reliés par au moins un câble de retenue (180) s'étendant à l'intérieur et s'étendant à travers le noeud de liaison (160).

2. Structure de liaison (110) selon la revendication 1,
**caractérisée en ce que**
le câble de retenue (180) est formé à partir d'un matériau en matière synthétique, d'un matériau à base de fibres, d'un matériau composite en matière synthétique ou d'un matériau en métal.

3. Structure de liaison (110) selon la revendication 1 ou 2,
**caractérisée en ce que**
le câble de retenue (180) est incorporé dans le matériau (K) du noeud de liaison (160) et est fixé ainsi.

4. Structure de liaison (110) selon la revendication 1, 2 ou 3,
**caractérisée en ce que**
le câble de retenue (180) est fixé au moyen de pièces d'extrémité de profil (170, 170a).

5. Structure de liaison (110) selon l'une quelconque des revendications précédentes,
**caractérisée en ce que**
au moins un des composants à profil creux (140) est pourvu d'une bande d'appui (142) enroulée à la manière d'une spirale.

6. Structure de liaison (110) selon l'une quelconque des revendications précédentes,
**caractérisée en ce que**
les composants à profil creux (120, 130, 150) sont fermés au niveau de leurs extrémités de profil (121, 131, 151) côté noeud avec des éléments de fermeture (125, 135, 155) de type bouchon formés à partir d'un matériau en mousse synthétique.

7. Structure de liaison (110) selon l'une quelconque des revendications précédentes,
**caractérisée en ce que**
au moins un des composants à profil creux (120, 130, 140, 150) est formé à partir d'un matériau composite en matière synthétique à base de fibres.

8. Procédé servant à fabriquer une structure de liaison (110) selon la revendication 1 ou selon l'une quelconque revendication indépendante de cette dernière, avec les étapes :
- de fourniture des composants à profil creux (120, 130; 120, 150) préfabriqués ;
- d'enfilage des composants à profil creux, dans lequel au moins deux des composants à profil creux (120, 130 ; 120, 150) sont tirés sur au moins un câble de retenue (180) ;
- de positionnement des extrémités de profil (121, 131 ; 121, 151) côté noeud dans un outil de pressage (200) générant le noeud de liaison (160) ;
- d'exécution d'une opération de pressage en ajoutant une masse en matière synthétique (K) contenant des fibres pour générer le noeud de liaison (160) reliant les extrémités de profil (121, 131 ; 121, 151).

9. Châssis (100) pour une carrosserie de véhicule, avec au moins une structure de liaison (110), qui est réalisée selon l'une quelconque des revendications 1 à 7.

10. Procédé servant à fabriquer un châssis (100) selon la revendication 9, avec au moins un câble de retenue (180), qui s'étend à travers plusieurs noeuds de liaison (160, 160a), dans lequel lesdits noeuds de liaison (160, 160a) sont fabriqués dans un ordre prédéfini et le câble de retenue (180) est ce faisant guidé ultérieurement en direction de respectivement le prochain noeud de liaison à fabriquer.
